# FASCICULE DE BREVET EUROPEEN

(11) **EP 3 648 972 B1**
(45) Date de publication et mention de la délivrance du brevet: **19.05.2021**
(21) Numéro de dépôt: 18765687.1
(22) Date de dépôt: 06.07.2018
(51) Int. Cl.: B32B 17/10, B64C 1/14, B64D 45/02

(54) **SUPPRESSION DU BRUIT DE DECHARGE ELECTROSTATIQUE PAR CONDUCTION ENTRE UN ELEMENT METALLIQUE EN GRADIN ET LE PRESSE GLACE**
UNTERDRÜCKUNG DES ELEKTROSTATISCHEN ENTLADUNGSGERÄUCHS DURCH LEITUNG ZWISCHEN EINEM GESTAFFELTEN METALLISCHEN ELEMENT UND DER SCHEIBENHALTERUNG
ELECTROSTATIC DISCHARGE NOISE SUPPRESSION BY CONDUCTION BETWEEN A TIERED METALLIC ELEMENT AND THE WINDOW PRESS

(30) Priorité: 06.07.2017 FR 1700720
(43) Date de publication de la demande: 13.05.2020
(73) Titulaire: SAINT-GOBAIN GLASS FRANCE, 92400 Courbevoie (FR); AIRBUS OPERATIONS (S.A.S.), 31060 Toulouse (FR)
(72) Inventeur: DEBRUS, Marie-Hélène, 45570 Dampierre en Burly (FR); TONDU, Thomas, 45600 Sully (FR); CANALES, Hugo, 31060 Toulouse (FR); FLOURENS, Frank, 31060 Toulouse (FR); UNFER, Catherine, 31060 Toulouse (FR); DELVERDIER, Osmin, 31060 Toulouse (FR)
(74) Mandataire: Saint-Gobain Recherche
(86) Numéro de dépôt international: PCT/FR2018/051697
(87) Numéro de publication internationale: WO 2019/008290

(56) Documents cités:
- EP-A2- 0 376 190
- FR-A1- 2 888 082
- US-A- 3 953 630
- US-A1- 2013 026 296
- DATABASE WPI Week 200101 13 octobre 2000 (2000-10-13) Thomson Scientific, London, GB; AN 2001-003055 XP002778093, -& JP 2000 286591 A (ASAHI GLASS CO LTD) 13 octobre 2000 (2000-10-13)

## Description

Les vitrages de cockpits aéronautiques sont des assemblages de verres minéraux et/ou organiques assemblés par feuilletage avec des couches adhésives intercalaires. La pénétration d'eau par diffusion à travers les couches adhésives intercalaires peut engendrer des défaillances du vitrage feuilleté, par exemple en favorisant le délaminage ou en dégradant les systèmes électriques intégrés au vitrage.

Une parade répandue à la pénétration d'humidité dans les couches adhésives intercalaires de feuilletage consiste en l'application périphérique d'un élément métallique conforme à une zone périphérique du vitrage feuilleté, notamment d'un élément métallique en gradin comme il sera vu par la suite, élément métallique communément appelé « Zed » du fait de la forme de cette ceinture.

Ce zed est collé aux feuilles de verre du vitrage feuilleté et peut être couvert par un joint d'étanchéité à l'air et à l'eau, tel qu'en silicone ou équivalent, ainsi que par une « goutte » (joint externe) procurant de bonnes propriétés de durabilité et d'aérodynamique. Ce joint externe est en polysulfure ou équivalent.

Le zed métallique se trouve donc au sein de silicone et polysulfure, électriquement isolé des éléments électriques internes du vitrage feuilleté et de sa structure de montage. Il est électriquement flottant, susceptible de porter des charges électrostatiques. Il peut se charger dans certaines conditions de vol à des potentiels sensiblement différents de ceux de la structure avion. Les modes de chargement du zed sont typiquement les vols en environnement chargeant : charge triboélectrique par impact de particules de l'environnement telles que neige, glace, poussières, pollution. Alors que la structure avion est équipée de systèmes de décharge, les éléments tels que les vitrages, isolés électriquement, accumulent les charges.

En particulier, les charges collectées par le vitrage peuvent être en partie drainées jusqu'au zed. Des potentiels permettant des décharges électrostatiques entre zed et structure avion (ou systèmes électriques intégrés au vitrage) peuvent être atteints.

Ceci peut se manifester par
- une signature sonore perturbant le pilote ;
- une signature lumineuse (flash, étincelles) perturbant le pilote ;
- une signature électromagnétique perturbant les équipements de l'avion.

Le document US 2013/026296 A1 décrit un vitrage feuilleté de cockpit d'avion, muni d'un film de protection électromagnétique destiné à empêcher le bruit électromagnétique. Le bord de ce vitrage feuilleté présente un contour continu en gradin et un élément en gradin en un matériau non conducteur. Le document décrit un presse glace solidaire de la structure de montage du vitrage feuilleté et en contact avec celui-ci dans le volume décrit par le contour continu en gradin de manière à retenir le vitrage feuilleté solidaire de sa structure de montage.

Le document FR 2 888 082 A1 décrit des vitrages feuilletés chauffants pour cockpits d'avion. Le bord de ce vitrage feuilleté présente un contour continu en gradin et un élément métallique en gradin. Le presse glace n'a pas une forme complémentaire de celle du contour continu en gradin, et aucun conducteur électrique ne relie l'élément métallique en gradin et la structure de montage du verre feuilleté par l'intermédiaire du presse glace.

L'invention a pour but de prévenir l'apparition des potentiels de décharge par une gestion de l'écoulement électrique vers le presse-glace électriquement solidaire de la structure de montage du vitrage feuilleté, en particulier la structure avion.

Ce but est atteint par l'invention qui, en conséquence, a pour objet un vitrage feuilleté comprenant au moins une première feuille de verre constituant une face extérieure du vitrage, reliée à une seconde feuille de verre par une première couche adhésive intercalaire, dans lequel le bord de la première feuille de verre est en retrait par rapport à celui de la seconde, une partie périphérique de la surface libre de la première feuille de verre, le chant de cette dernière, le chant de la première couche adhésive intercalaire et une partie de la surface de la seconde feuille de verre débordant de la première feuille de verre décrivant un contour continu en gradin qui est recouvert par un élément métallique en gradin avec interposition d'un joint externe, l'élément métallique en gradin étant recouvert par un joint d'étanchéité à l'air et à l'eau, un presse glace solidaire de la structure de montage du vitrage feuilleté et de forme sensiblement complémentaire de celle du contour continu en gradin étant en contact avec le vitrage feuilleté dans le volume décrit par le contour continu en gradin, de manière à retenir le vitrage feuilleté solidaire de sa structure de montage, caractérisé en ce qu'un conducteur électrique relie l'élément métallique en gradin et la structure de montage du vitrage feuilleté par l'intermédiaire du presse glace.

Comme déjà indiqué, l'élément métallique en gradin empêche la pénétration d'humidité dans les couches adhésives intercalaires de feuilletage. Il peut être en aluminium, inox ou autre métal, peut être indifféremment appelé « zed » dans la suite.

De préférence, la résistance électrique entre l'élément métallique en gradin et la structure de montage du vitrage feuilleté est au plus égale à 30 MΩ.

Selon d'autres caractéristiques préférées du vitrage feuilleté de l'invention :
- il comprend au moins une troisième feuille de verre reliée à la seconde feuille de verre par une seconde couche adhésive intercalaire ;
- le presse glace est boulonné / vissé sur la structure de montage du vitrage feuilleté; cette disposition est adaptée à un montage du vitrage feuilleté par l'extérieur de sa structure de montage ;
- selon une alternative, le presse glace est venu de matière avec la structure de montage du vitrage feuilleté (il en fait partie intégrante); le vitrage feuilleté est alors monté par l'intérieur de sa structure de montage, à laquelle il est solidarisé par fixation sur celle-ci d'un encadrement intérieur, appelé presse glace intérieur ;
- une partie du joint externe est rabattue au-dessus de l'élément métallique en gradin de manière à procurer au vitrage feuilleté de bonnes propriétés de durabilité et d'aérodynamique ; le joint externe est en polysulfure ou équivalent ;
- le joint d'étanchéité à l'air et à l'eau est en silicone ou équivalent
- le conducteur électrique est compressible et traverse localement le joint d'étanchéité ; on peut retirer localement la matière du joint d'étanchéité, ou bien cette matière peut être absente par le procédé de formation du joint d'étanchéité (injection-moulage...); le conducteur électrique compressible peut être une mousse chargée d'éléments électroconducteurs, un ressort... ;
- le conducteur électrique est positionné en partie à l'interface entre le joint externe et le joint d'étanchéité ;
- le conducteur électrique traverse localement la partie rabattue du joint externe et se prolonge avec contact jusqu'à une surface extérieure du presse glace, y compris une vis ou un boulon de fixation de celui-ci à la structure de montage du vitrage feuilleté ; là encore, on peut retirer localement de la matière à cette partie rabattue, ou bien cette matière peut être localement absente par le procédé de formation du joint externe : injection-moulage... ;
- la première feuille de verre est en verre minéral d'épaisseur comprise entre 0,5 et 5, de préférence entre 2 et 4 mm, ou en matériau polymère tel que poly(méthacrylate de méthyle) (PMMA) d'épaisseur comprise entre 0,5 et 5 mm ;
- la seconde feuille de verre, et le cas échéant la troisième feuille de verre, voire les suivantes sont en verre minéral d'épaisseur comprise entre 5 et 10 mm, ou en matériau polymère tel que poly(méthacrylate de méthyle) (PMMA) d'épaisseur comprise entre 5 et 30, de préférence au plus 20 mm ; ces feuilles de verre sont appelés « plis structuraux » ;
- les couches adhésives intercalaires sont en polyuréthane (PU), polyvinylbutyral (PVB), éthylène - acétate de vinyle (EVA) ou équivalent, l'épaisseur de la première couche adhésive intercalaire est comprise entre 3 et 10, de préférence 4 et 8 mm, et l'épaisseur de la seconde couche adhésive intercalaire et le cas échéant des suivantes est comprise entre 0,5 et 4, de préférence au plus égale à 2 mm.

Un autre objet de l'invention consiste en l'application d'un vitrage feuilleté décrit ci-dessus comme vitrage de bâtiment, de véhicule terrestre, aérien ou aquatique, ou pour le mobilier urbain, en particulier comme vitrage de cockpit de véhicule aérien. Les cockpits d'avions peuvent comporter deux vitrages frontaux et deux à quatre latéraux.

L'invention sera mieux comprise à la lumière de la description qui suit des dessins annexés dans lesquels
- la Figure 1 est une représentation schématique d'un vitrage feuilleté selon l'invention dans lequel le conducteur électrique est compressible et traverse localement le joint d'étanchéité;
- la Figure 2 est une représentation schématique d'un vitrage feuilleté selon l'invention dans lequel le conducteur électrique est positionné en partie à l'interface entre le joint externe et le joint d'étanchéité
- la Figure 3 est une représentation schématique d'un vitrage feuilleté selon l'invention dans lequel le conducteur électrique traverse localement la partie rabattue du joint externe et se prolonge avec contact jusqu'à une surface extérieure du presse glace, y compris une vis ou un boulon de fixation de celui-ci à la structure de montage du vitrage feuilleté.

Dans ces exemples, une feuille de verre désigne une feuille de verre aluminosilicate trempée chimique, commercialisée par la Société Saint-Gobain Sully sous la marque enregistrée Solidion®.

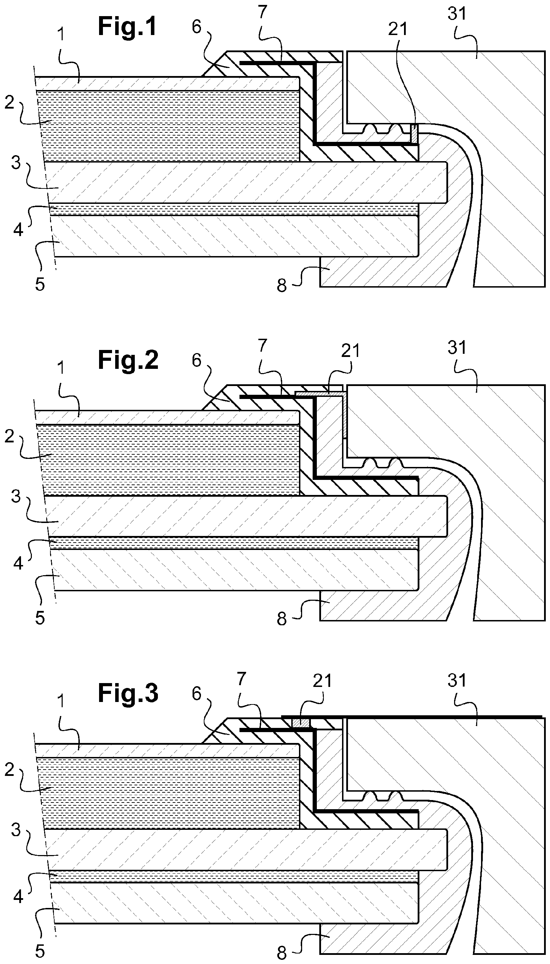

En référence aux Figures 1, 2 et 3, un vitrage feuilleté comprend une première feuille de verre 1 constituant une face extérieure du vitrage, de 3 mm d'épaisseur, collée à une seconde feuille de verre 3 de 8 mm d'épaisseur par une première couche adhésive intercalaire 2 de polyvinylbutyral (PVB) de 5,3 mm d'épaisseur.

Une troisième feuille de verre 5 de 8 mm d'épaisseur est collée à la seconde 3 par une seconde couche adhésive intercalaire 4 de polyvinylbutyral (PVB) de 2 mm d'épaisseur.

Le bord de la première feuille de verre 1 est en retrait par rapport à celui de la seconde 3, une partie périphérique de la surface libre de la première feuille de verre 1, le chant de cette dernière 1, le chant de la première couche adhésive intercalaire 2 et une partie de la surface de la seconde feuille de verre 3 débordant de la première feuille de verre 1 décrivant un contour continu en gradin qui est recouvert par un élément métallique en gradin 7 en aluminium.

Ledit contour continu en gradin est recouvert par l'élément métallique en gradin 7 avec interposition d'un joint externe 6 en polysulfure, dont une partie est rabattue au-dessus de l'élément métallique en gradin 7 de manière à procurer au vitrage feuilleté de bonnes propriétés de durabilité et d'aérodynamique.

L'élément métallique en gradin 7 est recouvert par un joint 8 d'étanchéité à l'air et à l'eau, en silicone.

Le vitrage feuilleté représenté sur les Figures 1, 2 et 3 peut être installé par l'extérieur d'une structure de montage du vitrage feuilleté, par boulonnage sur la structure de montage d'un presse glace 31 recouvrant le vitrage feuilleté; ce boulonnage peut produire un pincement du vitrage feuilleté ou pas, le vitrage feuilleté pouvant être aussi collé au presse glace 31, et dans tous les cas maintenu durablement solidaire de la structure de montage. Le presse glace 31 est un encadrement rapporté par l'extérieur.

Un montage par l'intérieur est aussi possible. Dans ce cas, la forme du presse glace mentionné précédemment est existante mais fait partie intégrante de la structure de montage, et on vient rapporter un encadrement (presse glace) depuis l'intérieur. Boulonnage du presse glace intérieur et collage du vitrage feuilleté peuvent être associés, avec ou sans pincement du vitrage feuilleté.

En référence à la Figure 1, un conducteur électrique 21 compressible relie électriquement le zed 7 et une surface intérieure du presse glace 31 à travers une réserve pratiquée dans le joint d'étanchéité 8. Le conducteur électrique 21 est en mousse chargée d'éléments conducteurs.

Sur la Figure 2, un conducteur électrique 21 constitué d'un profilé d'aluminium ou d'inox relie électriquement le zed 7 et une surface frontale du presse glace 31, en passant notamment par l'interface entre le joint externe 6 et le joint d'étanchéité 8.

Sur la Figure 3, le conducteur électrique 21 traverse localement la partie rabattue du joint externe 6 et se prolonge avec contact jusqu'à une surface extérieure du presse glace 31.

Pour chacun des vitrages feuilletés représentés schématiquement aux Figures 1 à 3, le conducteur électrique 21 peut, à chacune de ses deux extrémités, être brasé, vissé, serti, collé ou pincé selon la configuration de la liaison électrique.

Aucune décharge intempestive du zed, aucun bruit perturbant signalant cette décharge, ne sont observés sur les vitrages conformes à l'invention.

## Revendications

1. Vitrage feuilleté comprenant au moins une première feuille de verre (1) constituant une face extérieure du vitrage, reliée à une seconde feuille de verre (3) par une première couche adhésive intercalaire (2), dans lequel le bord de la première feuille de verre (1) est en retrait par rapport à celui de la seconde (3), une partie périphérique de la surface libre de la première feuille de verre (1), le chant de cette dernière (1), le chant de la première couche adhésive intercalaire (2) et une partie de la surface de la seconde feuille de verre (3) débordant de la première feuille de verre (1) décrivant un contour continu en gradin qui est recouvert par un élément métallique en gradin (7) avec interposition d'un joint externe (6), l'élément métallique en gradin (7) étant recouvert par un joint (8) d'étanchéité à l'air et à l'eau, un presse glace (31) solidaire de la structure de montage du vitrage feuilleté et de forme sensiblement complémentaire de celle du contour continu en gradin étant en contact avec le vitrage feuilleté dans le volume décrit par le contour continu en gradin, de manière à retenir le vitrage feuilleté solidaire de sa structure de montage, **caractérisé en ce qu'**un conducteur électrique (21) relie l'élément métallique en gradin (7) et la structure de montage du vitrage feuilleté par l'intermédiaire du presse glace (31).

2. Vitrage feuilleté selon la revendication 1, **caractérisé en ce que** la résistance électrique entre l'élément métallique en gradin (7) et la structure de montage du vitrage feuilleté est au plus égale à 30 MΩ.

3. Vitrage feuilleté selon l'une des revendications précédentes, **caractérisé en ce qu'**il comprend au moins une troisième feuille de verre (5) reliée à la seconde feuille de verre (3) par une seconde couche adhésive intercalaire (4).

4. Vitrage feuilleté selon l'une des revendications précédentes, **caractérisé en ce que** le presse glace (31) est boulonné / vissé sur la structure de montage du vitrage feuilleté.

5. Vitrage feuilleté selon la revendication 4, **caractérisé en ce que** le presse glace (31) est venu de matière avec la structure de montage du vitrage feuilleté.

6. Vitrage feuilleté selon l'une des revendications précédentes, **caractérisé en ce qu'**une partie du joint externe (6) est rabattue au-dessus de l'élément métallique en gradin (7) de manière à procurer au vitrage feuilleté de bonnes propriétés de durabilité et d'aérodynamique.

7. Vitrage feuilleté selon la revendication 1, **caractérisé en ce que** le conducteur électrique (21) est compressible et traverse localement le joint d'étanchéité (8).

8. Vitrage feuilleté selon la revendication 1, **caractérisé en ce que** le conducteur électrique (21) est positionné en partie à l'interface entre le joint externe (6) et le joint d'étanchéité (8).

9. Vitrage feuilleté selon la revendication 6, **caractérisé en ce que** le conducteur électrique (21) traverse localement la partie rabattue du joint externe (6) et se prolonge avec contact jusqu'à une surface extérieure du presse glace (31), y compris une vis ou un boulon de fixation de celui-ci (31) à la structure de montage du vitrage feuilleté.

10. Vitrage feuilleté selon l'une des revendications précédentes, **caractérisé en ce que** la première feuille de verre (1) est en verre minéral d'épaisseur comprise entre 0,5 et 5, de préférence entre 2 et 4 mm, ou en matériau polymère tel que poly(méthacrylate de méthyle) (PMMA) d'épaisseur comprise entre 0,5 et 5 mm.

11. Vitrage feuilleté selon l'une des revendications précédentes, **caractérisé en ce que** la seconde feuille de verre (3), et le cas échéant la troisième feuille de verre (5), voire les suivantes sont en verre minéral d'épaisseur comprise entre 5 et 10 mm, ou en matériau polymère tel que poly(méthacrylate de méthyle) (PMMA) d'épaisseur comprise entre 5 et 30, de préférence au plus 20 mm.

12. Vitrage feuilleté selon l'une des revendications précédentes, **caractérisé en ce que** les couches adhésives intercalaires (2 ; 4) sont en polyuréthane (PU), polyvinylbutyral (PVB), éthylène - acétate de vinyle (EVA) ou équivalent, **en ce que** l'épaisseur de la première couche adhésive intercalaire (2) est comprise entre 3 et 10, de préférence 4 et 8 mm, et **en ce que** l'épaisseur de la seconde couche adhésive intercalaire (4) et le cas échéant des suivantes est comprise entre 0,5 et 4, de préférence au plus égale à 2 mm.

13. Application d'un vitrage feuilleté selon l'une des revendications 1 à 12 comme vitrage de bâtiment, de véhicule terrestre, aérien ou aquatique, ou pour le mobilier urbain.

14. Application selon la revendication 13 comme vitrage de cockpit de véhicule aérien.

## Patentansprüche

1. Verbundverglasung, umfassend mindestens eine erste Glasscheibe (1), die eine Außenfläche der Verglasung bildet, die mit einer zweiten Glasscheibe (3) durch eine erste Klebstoffzwischenschicht (2) verbunden ist, in der der Rand der ersten Glasscheibe (1) in Bezug auf den der zweiten (3) zurückgesetzt ist, wobei ein peripherer Teil der freien Oberfläche der ersten Glasscheibe (1), die Kante der letzteren (1), die Kante der ersten Klebstoffzwischenschicht (2) und ein Teil der Oberfläche der zweiten Glasscheibe (3), der von der ersten Glasscheibe (1) hervorsteht, eine gestaffelte durchgehende Kontur beschreiben, die von einem gestaffelten metallischen Element (7) unter Zwischenfügung einer Außendichtung (6) bedeckt ist, wobei das gestaffelte metallische Element (7) von einer Abdichtung (8) gegen Luft und Wasser bedeckt ist, wobei eine Scheibenhalterung (31), die fest mit der Montagestruktur der Verbundverglasung verbunden und im Wesentlichen komplementär zu der der gestaffelten durchgehenden Kontur ist, mit der Verbundverglasung in dem durch die gestaffelte durchgehende Kontur beschriebenen Ausmaß in Kontakt steht, so dass die Verbundverglasung mit ihrer Montagestruktur fest verbunden bleibt, **dadurch gekennzeichnet, dass** ein elektrischer Leiter (21) das gestaffelte metallische Element (7) und die Befestigungsstruktur der Verbundverglasung über die Scheibenhalterung (31) verbindet.

2. Verbundverglasung nach Anspruch 1, **dadurch gekennzeichnet, dass** der elektrische Widerstand zwischen dem gestaffelten metallischen Element (7) und der Befestigungsstruktur der Verbundverglasung höchstens 30 MΩ beträgt.

3. Verbundverglasung nach einem der vorstehenden Ansprüche, **dadurch gekennzeichnet, dass** sie mindestens eine dritte Glasscheibe (5) umfasst, die mit der zweiten Glasscheibe (3) durch eine zweite Klebstoffzwischenschicht (4) verbunden ist.

4. Verbundverglasung nach einem der vorstehenden Ansprüche, **dadurch gekennzeichnet, dass** die Scheibenhalterung (31) mit der Befestigungsstruktur der Verbundverglasung verbolzt/verschraubt ist.

5. Verbundverglasung nach Anspruch 4, **dadurch gekennzeichnet, dass** die Scheibenhalterung (31) mit der Befestigungsstruktur der Verbundverglasung integriert ist.

6. Verbundverglasung nach einem der vorstehenden Ansprüche, **dadurch gekennzeichnet, dass** ein Teil der Außendichtung (6) über das gestaffelte metallische Element (7) geklappt ist, um der Verbundverglasung gute Haltbarkeits- und Aerodynamikeigenschaften zu verleihen.

7. Verbundverglasung nach Anspruch 1, **dadurch gekennzeichnet, dass** der elektrische Leiter (21) komprimierbar ist und lokal durch die Abdichtung (8) verläuft.

8. Verbundverglasung nach Anspruch 1, **dadurch gekennzeichnet, dass** der elektrische Leiter (21) teilweise an der Grenzfläche zwischen der Außendichtung (6) und der Abdichtung (8) angeordnet ist.

9. Verbundverglasung nach Anspruch 6, **dadurch gekennzeichnet, dass** der elektrische Leiter (21) lokal durch den geklappten Teil der Außendichtung (6) verläuft und sich unter Kontakt zu einer Außenoberfläche der Scheibenhalterung (31) erstreckt, einschließlich einer Schraube oder eines Bolzens zur Befestigung der Scheibenhalterung (31) an der Befestigungsstruktur der Verbundverglasung.

10. Verbundverglasung nach einem der vorstehenden Ansprüche, **dadurch gekennzeichnet, dass** die erste Glasscheibe (1) aus Mineralglas mit einer Dicke zwischen 0,5 und 5, vorzugsweise zwischen 2 und 4 mm, oder aus einem Polymermaterial wie Poly(methylmethacrylat) (PMMA) mit einer Dicke zwischen 0,5 und 5 mm besteht.

11. Verbundverglasung nach einem der vorstehenden Ansprüche, **dadurch gekennzeichnet, dass** die zweite Glasscheibe (3) und gegebenenfalls die dritte Glasscheibe (5), sogar die noch folgenden, aus Mineralglas mit einer Dicke zwischen 5 und 10 mm oder aus einem Polymermaterial wie Poly(methylmethacrylat) (PMMA) mit einer Dicke zwischen 5 und 30, vorzugsweise höchstens 20 mm, bestehen.

12. Verbundverglasung nach einem der vorstehenden Ansprüche, **dadurch gekennzeichnet, dass** die Klebstoffzwischenschichten (2; 4) aus Polyurethan (PU), Polyvinylbutyral (PVB), Ethylen-Vinylacetat (EVA) oder dergleichen bestehen, dass die Dicke der ersten Klebstoffzwischenschicht (2) zwischen 3 und 10, vorzugsweise 4 und 8 mm beträgt, und **dass** die Dicke der zweiten Klebstoffzwischenschicht (4) und gegebenenfalls der folgenden zwischen 0,5 und 4, vorzugsweise höchstens gleich 2 mm beträgt.

13. Verwendung einer Verbundverglasung nach einem der Ansprüche 1 bis 12 als Verglasung für Gebäude, Land-, Luft- oder Wasserfahrzeuge oder für Stadtmobiliar.

14. Verwendung nach Anspruch 13 als Cockpitverglasung für ein Luftfahrzeug.

## Claims

1. A laminated glazing comprising at least a first glass sheet (1) forming an exterior face of the glazing, which first sheet is linked to a second glass sheet (3) by a first interlayer adhesive layer (2), wherein the edge of the first glass sheet (1) is set back with respect to that of the second (3), a peripheral portion of the free surface of the first glass sheet (1), the edge of this glass sheet (1), the edge of the first interlayer adhesive layer (2) and a portion of the surface of the second glass sheet (3) extending beyond the first glass sheet (1) describing a continuous stepped contour which is covered by a stepped metal element (7) with the interposition of an external seal (6), the stepped metal element (7) being covered by an air- and watertight seal (8), a window press (31) rigidly connected to the structure for mounting the laminated glazing and the shape of which is substantially complementary to that of the continuous stepped contour making contact with the laminated glazing in the volume described by the continuous stepped contour, so as to hold the laminated glazing secure to its mounting structure, **characterized in that** an electrical conductor (21) links the stepped metal element (7) and the structure for mounting the laminated glazing by way of the window press (31).

2. The laminated glazing according to claim 1, **characterized in that** the electrical resistor between the stepped metal element (7) and the structure for mounting the laminated glazing is at most equal to 30 MΩ.

3. The laminated glazing according to one of the preceding claims, **characterized in that** it comprises at least a third glass sheet (5) that is linked to the second glass sheet (3) by a second interlayer adhesive layer (4).

4. The laminated glazing according to one of the preceding claims, **characterized in that** the window press (31) is bolted/screwed to the structure for mounting the laminated glazing.

5. The laminated glazing according to claim 4, **characterized in that** the window press (31) is formed integrally with the structure for mounting the laminated glazing.

6. The laminated glazing according to one of the preceding claims, **characterized in that** a portion of the external seal (6) is folded over the stepped metal element (7) so as to afford the laminated glazing good durability and aerodynamic properties.

7. The laminated glazing according to claim 1, **characterized in that** the electrical conductor (21) is compressible and passes locally through the leak-tight seal (8).

8. The laminated glazing according to claim 1, **characterized in that** the electrical conductor (21) is positioned partly at the interface between the external seal (6) and the leak-tight seal (8).

9. The laminated glazing according to claim 6, **characterized in that** the electrical conductor (21) passes locally through the folded-over portion of the external seal (6) and extends while maintaining contact up to an exterior surface of the window press (31), including a screw or a bolt for attaching said window press (31) to the structure for mounting the laminated glazing.

10. The laminated glazing according to one of the preceding claims, **characterized in that** the first glass sheet (1) is made of a mineral glass with a thickness of between 0.5 and 5, preferably between 2 and 4 mm, or made of a polymer material such as poly(methyl methacrylate) (PMMA) with a thickness of between 0.5 and 5 mm.

11. The laminated glazing according to one of the preceding claims, **characterized in that** the second glass sheet (3) and, if applicable, the third glass sheet (5) and so on are made of a mineral glass with a thickness of between 5 and 10 mm, or made of a polymer material such as poly(methyl methacrylate) (PMMA) with a thickness of between 5 and 30, preferably at most 20 mm.

12. The laminated glazing according to one of the preceding claims, **characterized in that** the interlayer adhesive layers (2; 4) are made of polyurethane (PU), polyvinyl butyral (PVB), ethylene/vinyl acetate (EVA) or equivalent, **in that** the thickness of the first interlayer adhesive layer (2) is between 3 and 10, preferably 4 and 8 mm, and **in that** the thickness of the second interlayer adhesive layer (4) and, if applicable, of the following layers is between 0.5 and 4, preferably at most equal to 2 mm.

13. The use of a laminated glazing according to one of claims 1 to 12 as building glazing, ground, air or water vehicle glazing, or glazing for street furniture.

14. The use according to claim 13 as aircraft cockpit glazing.
